# EUROPEAN PATENT APPLICATION

(11) **EP 4 679 539 A1**
(43) Date of publication of application: **14.01.2026**
(21) Application number: 25772306.4
(22) Date of filing: 21.01.2025
(51) Int. Cl.: H01M 4/66, H01M 10/04, B32B 15/08, B32B 15/20, B32B 37/06, B32B 37/10, H01M 50/536, H01M 50/522

(54) **ELECTRODE CURRENT COLLECTOR, MANUFACTURING METHOD THEREOF, AND SECONDARY BATTERY ELECTRODE ASSEMBLY COMPRISING SAME**

(30) Priority: 11.03.2024 KR 20240034130
(71) Applicant: LG Energy Solution, Ltd., Seoul 07335 (KR)
(72) Inventor: YOO, Su Yeon, Daejeon 34122 (KR); CHO, Woo Hyung, Daejeon 34122 (KR); LEE, Seok Kyeong, Daejeon 34122 (KR)
(74) Representative: BCKIP Part mbB
(86) International application number: PCT/KR2025/001128
(87) International publication number: WO 2025/192867

(57) **Abstract**

Disclosed are an electrode current collector including a first metal layer, a polymer resin layer provided on one surface of the first metal layer, and a second metal layer provided on one surface of the polymer resin layer, wherein the area of the polymer resin layer is less than the area of the first metal layer and less than the area of the second metal layer, a method of manufacturing the same, and a secondary battery electrode assembly including the same.

## Description

### [Technical Field]

This application claims the benefit of priority to Korean Patent Application No. 2024-0034130 filed on March 11, 2024, the disclosure of which is incorporated herein by reference in its entirety.

The present invention relates to an electrode current collector, a method of manufacturing the same, and a secondary battery electrode assembly including the same, and more particularly to an electrode current collector having a structure in which a resin layer is interposed between a pair of metal layers, a method of manufacturing the same, and a secondary battery electrode assembly including the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

Particularly, in a pouch-shaped secondary battery, a plurality of positive electrodes each having a predetermined size and a plurality of negative electrodes each having a predetermined size are sequentially stacked in the state in which separators are interposed therebetween, and electrode tabs or a pair of electrode leads connected to the electrode tabs protrudes outward from one side or opposite sides of a case.

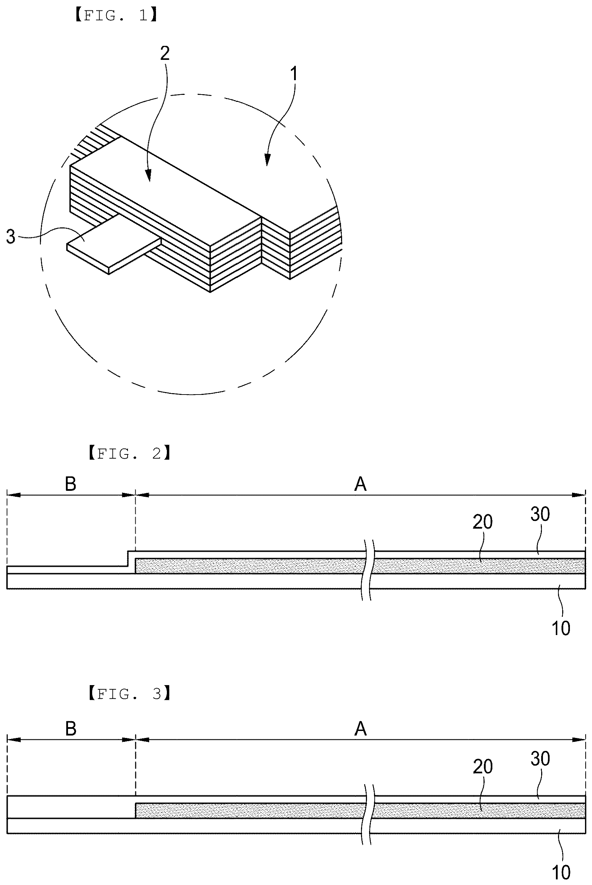

FIG. 1 is a partial schematic view of a conventional secondary battery. As shown in FIG. 1, a plurality of tabs 2 extends outwardly from an electrode assembly 1, and an electrode lead 3 is interposed between the tabs 2 and fixed to the tabs by welding.

Meanwhile, an aluminum current collector is generally used in a positive electrode to which a positive electrode active material is applied. However, since the aluminum current collector has been identified as the primary cause of ignition, research is underway to replace the aluminum current collector with a composite current collector, e.g., a current collector having a structure in which a resin layer is interposed between two metal layers.

When the current collector having the three-layer structure is used, high resistance is applied to the metal layer in case of short circuit since the metal layer is thin, it is possible to quickly cut off the flow of current, and therefore it is possible to improve safety.

However, in the current collector having the three-layer structure, the resin layer is located in the middle of the current collector even at the tab region, and therefore it is difficult to couple the electrode tabs to the electrode lead using typical welding methods.

### (Prior Art Document)

(Patent Document 1) Korean Patent Application Publication No. 2022-0124358

### [Disclosure]

### [Technical Problem]

The present invention has been made in view of the above problems, and it is an object of the present invention to provide an electrode current collector having a structure capable of easily fixing electrode tabs and an electrode lead even if a resin layer is interposed between two metal layers and a method of manufacturing the same.

It is another object of the present invention to provide a secondary battery electrode assembly having a structure in which a plurality of electrode tabs and an electrode lead can be easily energized.

### [Technical Solution]

As a technical means for achieving the above objects, an electrode current collector according to an embodiment of the present invention includes a first metal layer (10), a polymer resin layer (20) provided on one surface of the first metal layer (10), and a second metal layer (30) provided on one surface of the polymer resin layer (20), wherein the area of the polymer resin layer (20) is less than an area of the first metal layer (10) and less than an area of the second metal layer (30).

Also, in the electrode current collector according to the embodiment of the present invention, the polymer resin layer (20) may be provided on the remaining region of each of the first metal layer (10) and the second metal layer (30) excluding an electrode tab region formed on one side of each of the first metal layer and the second metal layer.

Also, in the electrode current collector according to the embodiment of the present invention, the polymer resin layer (20) may have an inclined surface (21) formed toward the one side where the electrode tab region is formed.

Also, in the electrode current collector according to the embodiment of the present invention, the thickness of the first metal layer may be greater than the thickness of the second metal layer.

In addition, an electrode current collector manufacturing method according to an embodiment of the present invention includes a first step of preparing a first metal layer (10), a second step of forming a polymer resin layer (20) on one surface of the first metal layer (10), and a third step of forming a second metal layer (30) on one surface of the polymer resin layer (20) using a deposition method, wherein the area of the polymer resin layer (20) is less than the area of each of the first metal layer (10) and the second metal layer (30).

Also, the electrode current collector manufacturing method according to the embodiment of the present invention may further include a lamination step of applying heat and pressure to the first metal layer (10) and the polymer resin layer (20) to bond the first metal layer and the polymer resin layer to each other between the second and third steps.

Also, in the electrode current collector manufacturing method according to the embodiment of the present invention, in the second step, the polymer resin layer (20) may be formed on the remaining region of the first metal layer (10) excluding an electrode tab region formed on one side of the first metal layer.

Also, in the electrode current collector manufacturing method according to the embodiment of the present invention, in the third step, the deposition method may be a physical vapor deposition method or a chemical vapor deposition method.

Also, in the electrode current collector manufacturing method according to the embodiment of the present invention, in the third step, the electrode tab region of the first metal layer (10) may be further deposited such that the second metal layer (30) is in contact with one surface of the first metal layer (10) and one surface of the polymer resin layer (20).

Also, in the electrode current collector manufacturing method according to the embodiment of the present invention, in the third step, the electrode tab region of the first metal layer (10) may be further deposited such that the second metal layer (30) is in contact with one surface of the first metal layer (10) and one surface of the polymer resin layer (20).

Also, in the electrode current collector manufacturing method according to the embodiment of the present invention, the polymer resin layer (20) may include at least one of polyethylene (PE), polypropylene (PP), polyethylene terephthalate (PET), or nylon.

In addition, a secondary battery electrode assembly including an electrode current collector according to an embodiment of the present invention includes at least one first electrode (100) including a first electrode current collector (110) and a first electrode tab (120) extending from one side of the first electrode current collector (110), at least one second electrode (200) including a second electrode current collector (210) and a second electrode tab (220) extending from one side of the second electrode current collector (210), a separator (300) interposed between the first electrode (100) and the second electrode, a first electrode lead (400) electrically connected to the first electrode tab (120), and a second electrode lead (500) electrically connected to the second electrode tab (220).

Also, in the secondary battery electrode assembly according to the embodiment of the present invention, the first electrode tab (120) and the first electrode lead (400) may be fixed to each other by welding.

Also, in the secondary battery electrode assembly according to the embodiment of the present invention, the second electrode tab (220) and the second electrode lead (500) may be fixed to each other by welding.

### [Advantageous Effects]

As is apparent from the above description, an electrode current collector according to the present invention, a method of manufacturing the same, and a secondary battery electrode assembly including the same have the advantage that a polymer resin layer is formed on one surface of a first metal layer such that a part of the first metal layer is exposed and then a second metal layer is formed using a deposition method, whereby it is possible to securely fix electrode tabs to an electrode lead by ultrasonic welding or the like.

In addition, the secondary battery electrode assembly according to the present invention has the merit that electrode tabs and an electrode lead can be easily energized since each electrode tab has no polymer resin layer.

### [Description of Drawings]

FIG. 1 is a partial schematic view of a conventional secondary battery.
FIG. 2 is a sectional view of an electrode current collector according to a first embodiment of the present invention.
FIG. 3 is a sectional view of an electrode current collector according to a second embodiment of the present invention.
FIG. 4 is a sectional view of an electrode current collector according to a third embodiment of the present invention.
FIG. 5 is a sectional view of an electrode current collector according to a fourth embodiment of the present invention.
FIG. 6 is a flowchart illustrating an electrode current collector manufacturing method according to a first embodiment of the present invention.
FIG. 7 is a conceptual view illustrating the electrode current collector manufacturing method according to the first embodiment of the present invention.
FIG. 8 is an exploded perspective view of a secondary battery electrode assembly including an electrode current collector according to a first embodiment of the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, an electrode current collector according to the present invention, a method of manufacturing the same, and a secondary battery electrode assembly including the same will be described.

FIG. 2 is a sectional view of an electrode current collector according to a first embodiment of the present invention.

Referring to FIG. 2, the electrode current collector according to the first embodiment of the present invention includes a first metal layer 10, a polymer resin layer 20, and a second metal layer 30.

First, when the electrode current collector according to the present invention is configured as a positive electrode current collector, the first metal layer 10 may be configured to include an aluminum (Al) material, wherein the first metal layer 10 may be formed in the shape of a thin sheet having a thickness of approximately 0.5 to 10 µm.

Of course, the first metal layer 10 may be made of stainless steel, nickel, titanium, or sintered carbon, instead of aluminum, provided that the first metal layer exhibits high conductivity while the first metal layer does not induce any chemical change in a battery. Alternatively, the first metal layer may be made of aluminum or stainless steel, the surface of which is treated with carbon, nickel, titanium, or silver. In addition, the first metal layer may have a micro-scale uneven pattern formed on the surface thereof so as to increase the force of adhesion to an electrode active material, or may be configured in any of various forms, such as a film, a sheet, a foil, a net, a porous body, a foam body, and a non-woven fabric body.

In addition, the polymer resin layer 20 may be provided on one surface of the first metal layer 10. For example, in FIG. 2, one surface of the first metal layer 10 may be the surface facing the 12 o'clock direction.

The polymer resin layer 20 may be configured to include at least one material selected from polyethylene (PE), polypropylene (PP), polyethylene terephthalate (PET), and nylon. For example, the polymer resin layer 20 may be made of polyethylene terephthalate (PET) and may have a thickness of approximately 1 to 15 µm; however, the present invention is not limited thereto.

The area of the polymer resin layer 20 may be less than the area of each of the first metal layer 10 and the second metal layer 30. For example, the area of the polymer resin layer 20 may correspond to the area of the remaining region excluding one side of each of the first metal layer 10 and the second metal layer 30, i.e., an electrode tab region formed at the 9 o'clock position in FIG. 2.

Here, the electrode tab region may be the region corresponding to an uncoated portion B having no active material applied thereto, which is one of a coated portion A having an active material applied thereto, which is a part of each of the first metal layer 10 and the second metal layer 30 of the electrode current collector according to the present invention, and the uncoated portion B having no active material applied thereto.

Accordingly, the polymer resin layer 20 may be provided on the coated portion A, which is the remaining region of each of the first metal layer 10 and the second metal layer 30 excluding the electrode tab region formed on one side of each of the first metal layer and the second metal layer.

In addition, the second metal layer 30 may be provided on one surface of the polymer resin layer 20. Here, the second metal layer 30 may include the same material as the first metal layer 10. For example, if the first metal layer 10 includes an aluminum (Al) material, the second metal layer 30 may also include an aluminum (Al) material.

Of course, as described above, the second metal layer 30 may be made of stainless steel, nickel, titanium, or sintered carbon, instead of aluminum, provided that the second metal layer exhibits high conductivity while the second metal layer does not induce any chemical change in the battery. Alternatively, the second metal layer may be made of aluminum or stainless steel, the surface of which is treated with carbon, nickel, titanium, or silver. In addition, the second metal layer may have a micro-scale uneven pattern formed on the surface thereof so as to increase the force of adhesion to the electrode active material, or may be configured in any of various forms, such as a film, a sheet, a foil, a net, a porous body, a foam body, and a non-woven fabric body.

The second metal layer 30 may have a thickness of approximately 0.5 to 10 µm; however, the present invention is not limited thereto.

As an example, if the thickness of the first metal layer 10 is 1.0 µm and the thickness of the polymer resin layer 20 is 6.0 µm, the thickness of the second metal layer 30 may be 1.0 µm.

As another example, if the thickness of the first metal layer 10 is 5.0 µm and the thickness of the polymer resin layer 20 is 5.0 µm, the thickness of the second metal layer 30 may be 5.0 µm.

As yet another example, the thickness of the first metal layer 10 may be greater than the thickness of the second metal layer 30. In other words, the thickness of the second metal layer 30 may be less than the thickness of the first metal layer 10.

For example, if the thickness of the first metal layer 10 is 9.0 µm and the thickness of the polymer resin layer 20 is 5.0 µm, the thickness of the second metal layer 30 may be 1.0 µm.

When the first metal layer 10 is thicker than the second metal layer 30, as described above, it is possible to more easily manufacture the electrode current collector. In the electrode current collector according to the present invention, the film-shaped or sheet-shaped first metal layer 10 is prepared and then the polymer resin layer 20 and the second metal layer 30 are formed sequentially because it is possible to more easily manufacture the film-shaped or sheet-shaped first metal layer 10 if the first metal layer is thicker.

Meanwhile, when the electrode current collector according to the present invention is configured as a negative electrode current collector, the negative electrode current collector is substantially the same as the positive electrode current collector described above except that only the materials of the first metal layer 10 and the second metal layer 30 are different.

For example, the first metal layer 10 may be configured to include a copper (Cu) material, wherein the first metal layer 10 may be formed in the shape of a thin sheet having a thickness of approximately 0.5 to 10 µm.

In addition, the second metal layer 30 may include the same material as the first metal layer 10. For example, if the first metal layer 10 includes a copper (Cu) material, the second metal layer 30 may also include a copper (Cu) material.

FIG. 3 is a sectional view of an electrode current collector according to a second embodiment of the present invention.

The electrode current collector according to the second embodiment of the present invention includes a first metal layer 10, a polymer resin layer 20, and a second metal layer 30, in the same manner as the first embodiment.

However, in the second embodiment, the second metal layer 30 may be formed to a thickness of approximately 0.5 to 10 µm in the region of the first metal layer 10 where the polymer resin layer 20 is formed (coated portion A) but may be formed to the sum of the thickness of the second metal layer and the thickness of the polymer resin layer 20 in the region of the first metal layer 10 where the polymer resin layer 20 is not formed (uncoated portion B), unlike the first embodiment.

That is, in the electrode current collector according to the second embodiment, the second metal layer 30 may be formed to the sum of the thickness of the second metal layer and the thickness of the polymer resin layer 20 in the region where the polymer resin layer 20 is not formed (uncoated portion B) such that the thickness of the region where the polymer resin layer 20 is formed (coated portion A) and the thickness of the region where the polymer resin layer 20 is not formed (uncoated portion B) are equal.

As an example, if the thickness of the first metal layer 10 is 1.0 µm and the thickness of the polymer resin layer 20 is 6.0 µm, the thickness of the second metal layer 30 in the region where the polymer resin layer 20 is formed (coated portion A) may be 1.0 µm, whereas the thickness of the second metal layer in the region where the polymer resin layer 20 is not formed (uncoated portion B) may be 7 µm.

As another example, if the thickness of the first metal layer 10 is 5.0 µm and the thickness of the polymer resin layer 20 is 5.0 µm, the thickness of the second metal layer 30 in the region where the polymer resin layer 20 is formed (coated portion A) may be 5.0 µm, whereas the thickness of the second metal layer in the region where the polymer resin layer 20 is not formed (uncoated portion B) may be 10 µm.

As yet another example, the thickness of the first metal layer 10 may be greater than the thickness of the second metal layer 30. In other words, the thickness of the second metal layer 30 may be less than the thickness of the first metal layer 10.

For example, if the thickness of the first metal layer 10 is 9.0 µm and the thickness of the polymer resin layer 20 is 5.0 µm, the thickness of the second metal layer 30 in the region where the polymer resin layer 20 is formed (coated portion A) may be 1.0 µm, whereas the thickness of the second metal layer in the region where the polymer resin layer 20 is not formed (uncoated portion B) may be 6 µm.

Meanwhile, when the electrode current collector according to the present invention is configured as a negative electrode current collector, the negative electrode current collector is substantially the same as a positive electrode current collector except that only the materials of the first metal layer 10 and the second metal layer 30 are different.

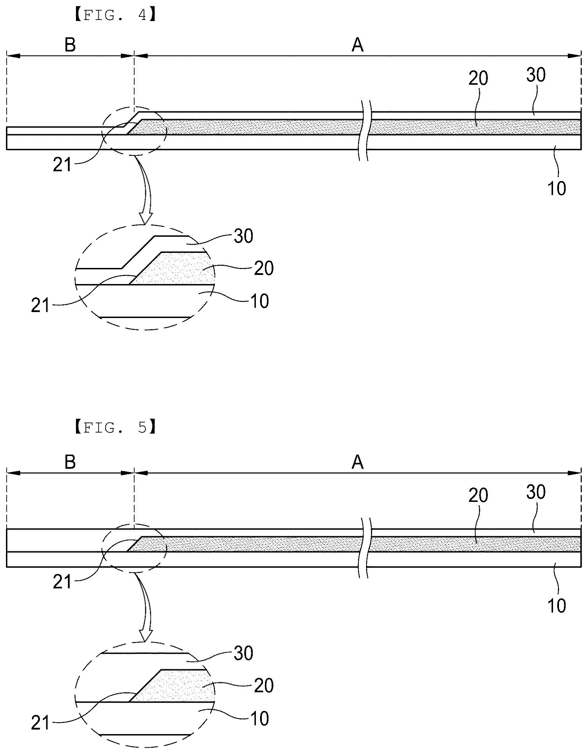

FIG. 4 is a sectional view of an electrode current collector according to a third embodiment of the present invention.

The electrode current collector according to the third embodiment of the present invention includes a first metal layer 10, a polymer resin layer 20, and a second metal layer 30, in the same manner as the first and second embodiments.

However, in the third embodiment, an inclined surface 21 is formed on one side of the polymer resin layer 20, unlike the first and second embodiments.

More specifically, referring to FIG. 4, the polymer resin layer 20 may include an inclined surface 21 formed toward one side (9 o'clock direction in FIG. 4) where an electrode tab region (uncoated portion B) is formed.

The inclined surface 21 may be one side surface that extends from the surface in contact with the first metal layer 10 to the surface on which the second metal layer 30 is formed. The inclined surface 21 may be the surface formed as the
result of the area of the surface in contact with the first metal layer 10 (6 o'clock direction in FIG. 4) being greater than the area of the surface in contact with the second metal layer 30 (12 o'clock direction in FIG. 4).

In addition, for example, the inclined surface 21 may be configured to have an inclination angle of greater than 0° and less than 90° with respect to one surface of the first metal layer 10.

Meanwhile, the electrode current collector according to the third embodiment may be configured such that the thickness of the second metal layer 30 in the region where the polymer resin layer 20 is formed (coated portion A) and the thickness of the second metal layer in the region where the polymer resin layer 20 is not formed (uncoated portion B) are equal, in the same manner as the electrode current collector according to the first embodiment.

FIG. 5 is a sectional view of an electrode current collector according to a fourth embodiment of the present invention.

The electrode current collector according to the fourth embodiment of the present invention includes a first metal layer 10, a polymer resin layer 20, and a second metal layer 30, wherein an inclined surface 21 is formed on one side of the polymer resin layer 20, in the same manner as the third embodiment.

However, in the fourth embodiment, the second metal layer 30 may be formed to a thickness of approximately 0.5 to 10 µm in the region of the first metal layer 10 where the polymer resin layer 20 is formed (coated portion A) but may be formed to the sum of the thickness of the second metal layer and the thickness of the polymer resin layer 20 in the region of the first metal layer 10 where the polymer resin layer 20 is not formed (uncoated portion B), unlike the third embodiment.

That is, in the electrode current collector according to the fourth embodiment, the second metal layer 30 may be formed to the sum of the thickness of the second metal layer and the thickness of the polymer resin layer 20 in the region where the polymer resin layer 20 is not formed (uncoated portion B) such that the thickness of the region where the polymer resin layer 20 is formed (coated portion A) and the thickness of the region where the polymer resin layer 20 is not formed (uncoated portion B) are equal.

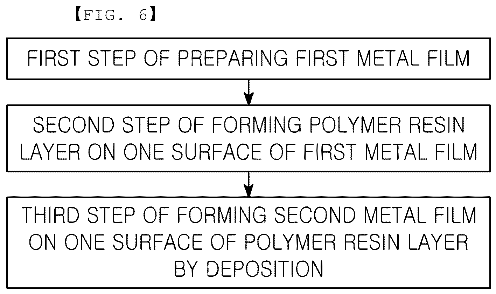

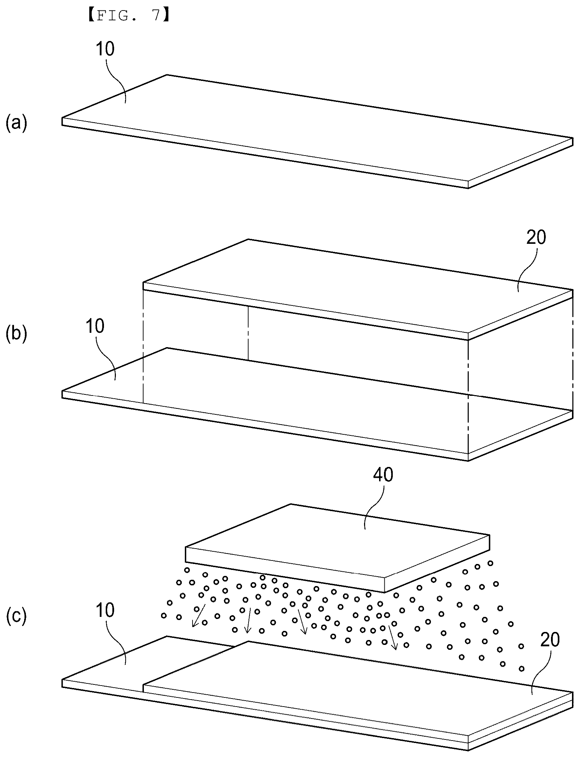

FIG. 6 is a flowchart illustrating an electrode current collector manufacturing method according to a first embodiment of the present invention, and FIG. 7 is a conceptual view illustrating the electrode current collector manufacturing method according to the first embodiment of the present invention.

Referring to FIGs. 2, 6, and 7, the electrode current collector manufacturing method according to the first embodiment of the present invention includes a first step of preparing a first metal layer 10, a second step of forming a polymer resin layer 20 on one surface of the first metal layer 10, and a third step of forming a second metal layer 30 on one surface of the polymer resin layer 20 using a deposition method.

First, a method of manufacturing a positive electrode current collector will be described. In the first step, the first metal layer 10 may be configured to include an aluminum (Al) material, wherein the first metal layer 10 may be formed in the shape of a thin sheet having a thickness of approximately 0.5 to 10 µm.

The second step is a step of forming a sheet-shaped polymer resin layer 20 having a certain thickness on one surface of the first metal layer 10. For example, in (b) of FIG. 6, one surface of the first metal layer 10 may be the surface facing the 12 o'clock direction.

Here, a method of forming the polymer resin layer 20 is not particularly limited, but as an example, the polymer resin layer 20 may be formed by applying a polymer resin in a slurry state or by overlapping sheet-shaped polymer resins.

The polymer resin layer 20 may be configured to include at least one material selected from polyethylene (PE), polypropylene (PP), polyethylene terephthalate (PET), and nylon.

The area of the polymer resin layer 20 may be less than the area of the first metal layer 10. For example, the area of the polymer resin layer 20 may correspond to the area of the remaining region excluding one side of the first metal layer 10, i.e., an electrode tab region formed at the 10 o'clock position in (b) of FIG. 6.

That is, in the second step, the polymer resin layer 20 may be formed on one surface of the first metal layer 10 in the region corresponding to a coated portion A.

The third step is a step of forming a second metal layer 30 on one surface of the polymer resin layer 20 using a deposition method.

Here, a physical vapor deposition method that vaporizes a solid-state metal, which is a target material, to form the second metal layer 30 or a chemical vapor deposition method that decomposes a metal salt or a polymer material containing a metal to form the second metal layer 30 may be used as the deposition method. Since these deposition methods are known in the art, the principles and other details thereof will be omitted.

In the third step, the target material moves not only to one surface of the polymer resin layer 20 but also to the electrode tab region (uncoated portion B) of the first metal layer 10, which does not overlap the polymer resin layer 20 and is exposed. Accordingly, the second metal layer 30 may be in contact with a part of one surface of the first metal layer 10 and the entirety of one surface of the polymer resin layer 20.

Here, the target material for forming the second metal layer 30 is the same material as the first metal layer 10. For example, if the first metal layer 10 is made of aluminum (Al), the target material is also aluminum (Al).

In addition, the second metal layer 30 may be formed to a thickness of approximately 0.5 to 10 µm; however, the present invention is not limited thereto.

As an example, if the thickness of the first metal layer 10 is 1.0 µm and the thickness of the polymer resin layer 20 is 6.0 µm, the thickness of the second metal layer 30 may be 1.0 µm.

As another example, if the thickness of the first metal layer 10 is 5.0 µm and the thickness of the polymer resin layer 20 is 5.0 µm, the thickness of the second metal layer 30 may be 5.0 µm.

As yet another example, the thickness of the second metal layer 30 may be less than the thickness of the first metal layer 10. In other words, the thickness of the first metal layer 10 may be greater than the thickness of the second metal layer 30.

For example, if the thickness of the first metal layer 10 is 9.0 µm and the thickness of the polymer resin layer 20 is 5.0 µm, the thickness of the second metal layer 30 may be 1.0 µm.

In the third step, the second metal layer 30 may be formed so as to be in contact with one surface of the polymer resin layer 20 and the electrode tab region of the first metal layer 10 using a deposition unit 40.

In addition, the electrode current collector manufacturing method according to the present invention may include a lamination step of applying a certain range of heat and pressure to the first metal layer 10 and the polymer resin layer 20 as needed between the second and third steps.

In the lamination step, the first metal layer 10 and the polymer resin layer 20 may be bonded to each other. Of course, if the polymer resin layer 20 is formed by applying a polymer resin in a slurry state, the lamination step of applying heat and pressure may be omitted.

Meanwhile, an electrode, more specifically a positive electrode, is obtained by applying a positive active material to a predetermined region on one surface or both surfaces of the electrode current collector manufactured through the aforementioned processes.

Specifically, an active material may be applied to the other surface (6 o'clock direction in FIG. 2) of the first metal layer 10 and/or one surface (12 o'clock direction in FIG. 2) of the second metal layer 30.

Here, the active material may be a positive electrode active material, and a layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂(MoO₄)₃; or LiNiₓMn₂₋ₓO₄ (0.01≤x≤0.6) may be used as the positive electrode active material.

Meanwhile, the positive electrode active material may be mixed with a conductive agent and a binder, and a filler may be further added as needed.

The conductive agent is generally added in an amount of 1 to 50 wt% based on the total weight of the mixture including the positive electrode active material. The conductive agent is not particularly restricted as long as the conductive agent exhibits high conductivity while the conductive agent does not induce any chemical change in a battery. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the positive electrode active material and the conductive agent and in binding with the current collector. The binder is generally added in an amount of 1 to 50 wt% based on the total weight of the mixture including the positive electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylenepropylene-diene terpolymer (EPDM), sulfonated EPDM, styrene butadiene rubber, fluoro rubber, and various copolymers.

Also, in the electrode current collector, the uncoated portion B to which the positive electrode active material is not applied may be notched into a certain shape to form an electrode tab, but if necessary, it is possible to use the entirety of the uncoated portion B as an electrode tab without notching.

Meanwhile, a negative electrode current collector is manufactured using the substantially the same method as the positive electrode current collector manufacturing method described above except that only the materials of the first metal layer 10 and the second metal layer 30 are different.

For example, in the first step, the first metal layer 10 may be configured to include a copper (Cu) material, wherein the first metal layer 10 may be formed in the shape of a thin sheet having a thickness of approximately 0.5 to 10 µm.

Also, in the third step, the target material for forming the second metal layer 30 is the same material as the first metal layer 10. For example, if the first metal layer 10 is made of copper (Cu), the target material is also copper (Cu).

In addition, the second metal layer 30 may be formed so as to have a thickness of approximately 0.5 to 10 µm; however, the present invention is not limited thereto. For example, the second metal layer 30 may be formed on one surface of the polymer resin layer 20 so as to have a thickness of approximately 0.5 to 2 µm, and may be formed in the region of the first metal layer 10 where the polymer resin layer 20 is not formed (uncoated portion B) so as to have a thickness equivalent to the sum of the thickness of the second metal layer and the thickness of the polymer resin layer 20.

As an example, if the thickness of the first metal layer 10 is 1.0 µm and the thickness of the polymer resin layer 20 is 6.0 µm, the thickness of the second metal layer 30 in the region where the polymer resin layer 20 is formed (coated portion A) may be 1.0 µm, whereas the thickness of the second metal layer in the region where the polymer resin layer 20 is not formed (uncoated portion B) may be 7 µm.

Meanwhile, an electrode, more specifically a negative electrode, is obtained by applying a negative electrode active material to a predetermined region of one surface or both surfaces of the electrode current collector having the structure in which the first metal layer 10 and the second metal layer 30 made of the copper (Cu) material are located on both surfaces of the polymer resin layer 20.

For example, carbon, such as non-graphitizing carbon or graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O_{5,} GeO, GeO₂, Bi₂O₃, Bi₂O₄, or Bi₂O₅; a conductive polymer, such as polyacetylene; a Li-Co-Ni-based material; or a Si-based material, such as Si, SiO, SiO₂, or a mixture thereof, may be used as the negative electrode active material; however, the present invention is not limited thereto.

Of course, the negative electrode active material may be further mixed with a conductive agent and a binder to form a negative electrode active material layer.

The conductive agent is a component configured to further improve conductivity of the negative electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the negative electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

As described above, the polymer resin layer is formed on one surface of the first metal layer such that a part of the first metal layer is exposed and then the second metal layer is formed using the deposition method, whereby it is possible to manufacture an electrode current collector having a structure in which the uncoated portion functioning as the electrode tab has no polymer resin layer.

In addition, since the second metal layer is formed using the physical vapor deposition method or the chemical vapor deposition method, it is possible to omit a separate process for fixing the first metal layer and the second metal layer or fixing the polymer resin layer and the second metal layer.

In addition, it is possible to form the first metal layer in a sheet shape using the deposition method.

In an electrode current collector manufacturing method according to a second embodiment of the present invention, an electrode current collector may be manufactured using the same method as the first embodiment except that only the thickness of a second metal layer on an uncoated portion having no polymer resin layer formed thereon is different.

In addition, when the electrode current collector according to the present invention is configured as a negative electrode current collector, the negative electrode current collector may be manufactured using the same method as the positive electrode current collector manufacturing method according to the first embodiment described above except that only the materials of a first metal layer and a second metal layer are different.

Also, in an electrode current collector manufacturing method according to a third embodiment of the present invention, an electrode current collector may be manufactured using the same method as the positive electrode current collector manufacturing method according to the first embodiment described above except that a polymer resin layer is provided with an inclined surface.

In particular, when the inclined surface 21 is formed on one side of the polymer resin layer 20 (see FIG. 4), a metal target material may more easily reach a side surface of the polymer resin layer 20 during a deposition process, whereby it is possible to reliably prevent the formation of an empty space between a first metal layer 10 and a second metal layer 30.

Also, in an electrode current collector manufacturing method according to a fourth embodiment of the present invention, an electrode current collector may be manufactured using the same method as the first embodiment except that an inclined surface is formed on one side of a polymer resin layer and only the thickness of a second metal layer on an uncoated portion having no polymer resin layer formed thereon is different.

Hereinafter, a secondary battery electrode assembly including an electrode current collector manufactured by the electrode current collector manufacturing method according to the present invention will be described.

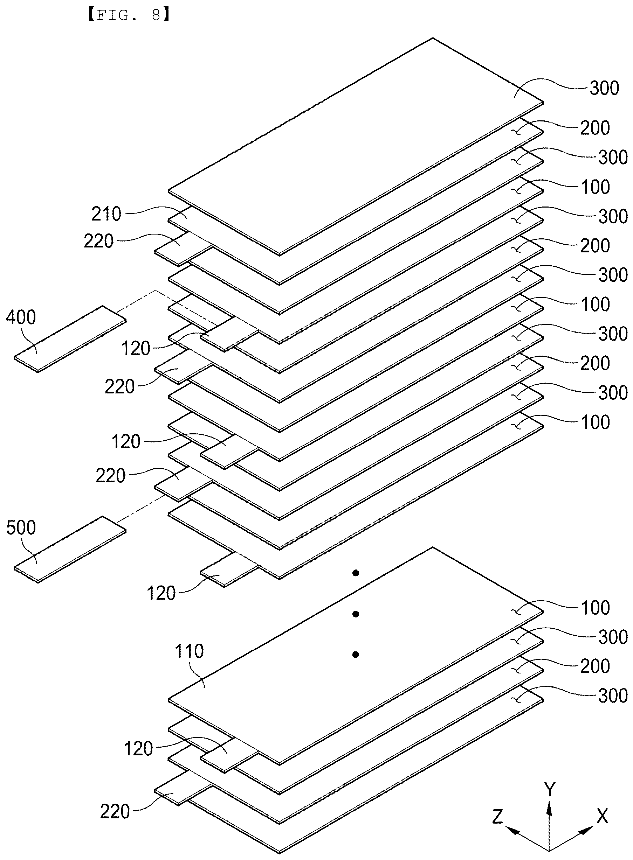

FIG. 8 is an exploded perspective view of a secondary battery electrode assembly including an electrode current collector according to a first embodiment of the present invention.

As shown in FIG. 8, the secondary battery electrode assembly according to the present invention has a structure in which at least one first electrode 100, at least one second electrode 200, and at least one separator 300 are stacked.

Here, the first electrode 100 may be a positive electrode, and the second electrode 200 may be a negative electrode. The separator 300 may be located between the first electrode 100 and the second electrode 200, on the uppermost second electrode 200, and under the lowermost second electrode 200; however, the present invention is not limited thereto.

In addition, a first electrode lead 400 may be electrically connected to the first electrode 100, and a second electrode lead 500 may be electrically connected to the second electrode 200.

Referring to FIGs. 2 to 8, the first electrode 100 may include a first electrode current collector 110 and a first electrode tab 120.

Here, the first electrode current collector 110 may have a three-layer structure in which a polymer resin layer 20 is interposed between a first metal layer 10 including an aluminum (Al) material and a second metal layer 30, and the first electrode tab 120 may include only a first metal layer 10 and a second metal layer 30.

The second electrode 200 may include a second electrode current collector 210 made of copper (Cu) and a second electrode tab 220.

The separator 300 is interposed between the first electrode 100 and the second electrode 200 to prevent short circuit and to allow only migration of lithium ions.

It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, a plurality of first electrodes 100 may be electrically connected to each other via a single first electrode lead 400.

Generally, in an electrode current collector having a resin layer interposed between a pair of aluminum layers, the resin layer is located in the middle of an electrode tab in a thickness direction (y-axis direction), and therefore it is difficult to securely fix a plurality of electrode tabs to an electrode lead by ultrasonic welding and to electrically connect each of the plurality of electrode tabs to the electrode lead.

However, in the first electrode current collector 110 manufactured by the electrode current collector manufacturing method according to the present invention, the first electrode tab 120 includes the first metal layer 10 and the second metal layer 30, and therefore it is possible not only to securely fix the plurality of the first electrode tabs 120 to the first electrode lead 400 by welding but also to electrically connect each of the plurality of the first electrode tabs 120 to the first electrode lead 400.

Here, the welding may be ultrasonic welding; however, the present invention is not limited thereto.

Similarly, a plurality of second electrodes 200 may be electrically connected to each other via a single second electrode lead 500.

Although the first electrode 100 includes a first electrode current collector 110 having a three-layer structure in which a polymer resin layer 20 is interposed between a first metal layer 10 made of aluminum (Al) and a second metal layer 30 while the second electrode 200 includes a single-layer second electrode current collector 210 made of copper (Cu), as described above by way of example, the second electrode 200 may also include a second electrode current collector 210 having a three-layer structure in which a polymer resin layer 20 is interposed between a first metal layer 10 made of copper (Cu) and a second metal layer 30.

In addition, although the secondary battery electrode assembly including the electrode current collector according to the first embodiment has been described, it is obvious that it is possible to manufacture an electrode assembly having the same structure as described above using the electrode current collector according to the second embodiment in which the thickness of the second metal layer is different, the electrode current collector according to each of the third and fourth embodiments including the polymer resin layer having the inclined surface.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: First metal layer
20: Polymer resin layer 21: Inclined surface
30: Second metal layer
40: Deposition unit
100: First electrode
110: First electrode current collector
120: First electrode tab
200: Second electrode
210: Second electrode current collector
220: Second electrode tab
300: Separator
400: First electrode lead
500: Second electrode lead
A: Coated portion
B: Uncoated portion

## Claims

1. An electrode current collector comprising:
a first metal layer;
a polymer resin layer provided on one surface of the first metal layer; and
a second metal layer provided on one surface of the polymer resin layer, wherein
an area of the polymer resin layer is less than an area of the first metal layer and less than an area of the second metal layer.

2. The electrode current collector according to claim 1, wherein the polymer resin layer is provided on a remaining region of each of the first metal layer and the second metal layer excluding an electrode tab region formed on one side of each of the first metal layer and the second metal layer.

3. The electrode current collector according to claim 2, wherein the polymer resin layer has an inclined surface formed toward the one side where the electrode tab region is formed.

4. The electrode current collector according to claim 2, wherein a thickness of the first metal layer is greater than a thickness of the second metal layer.

5. A method of manufacturing the electrode current collector according to any one of claims 1 to 4, the method comprising:
a first step of preparing a first metal layer;
a second step of forming a polymer resin layer on one surface of the first metal layer; and
a third step of forming a second metal layer on one surface of the polymer resin layer using a deposition method,
wherein an area of the polymer resin layer is less than an area of each of the first metal layer and the second metal layer.

6. The method according to claim 5, further comprising a lamination step of applying heat and pressure to the first metal layer and the polymer resin layer to bond the first metal layer and the polymer resin layer to each other between the second and third steps.

7. The method according to claim 5, wherein, in the second step, the polymer resin layer is formed on a remaining region of the first metal layer excluding an electrode tab region formed on one side of the first metal layer.

8. The method according to claim 7, wherein, in the third step, the deposition method is a physical vapor deposition method or a chemical vapor deposition method.

9. The method according to claim 8, wherein, in the third step, the electrode tab region of the first metal layer is further deposited such that the second metal layer is in contact with one surface of the first metal layer and one surface of the polymer resin layer.

10. The method according to claim 9, wherein each of the first metal layer and the second metal layer comprises an aluminum or copper material.

11. The method according to claim 7, wherein the polymer resin layer comprises at least one of polyethylene (PE), polypropylene (PP), polyethylene terephthalate (PET), or nylon.

12. A secondary battery electrode assembly comprising the electrode current collector according to any one of claims 1 to 4, the secondary battery electrode assembly comprising:
at least one first electrode comprising a first electrode current collector and a first electrode tab extending from one side of the first electrode current collector;
at least one second electrode comprising a second electrode current collector and a second electrode tab extending from one side of the second electrode current collector;
a separator interposed between the first electrode and the second electrode;
a first electrode lead electrically connected to the first electrode tab; and
a second electrode lead electrically connected to the second electrode tab.

13. The secondary battery electrode assembly according to claim 12, wherein the first electrode tab and the first electrode lead are fixed to each other by welding.

14. The secondary battery electrode assembly according to claim 12, wherein the second electrode tab and the second electrode lead are fixed to each other by welding.
